# EUROPEAN PATENT SPECIFICATION

(11) **EP 1 705 836 B1**
(45) Date of publication and mention of the grant of the patent: **18.04.2007**
(21) Application number: 05102408.1
(22) Date of filing: 24.03.2005
(51) Int. Cl.: H04L 12/28

(54) **Scanning for Wireless Local Area Networks**
Abtastung nach drahtlosen lokalen Netzwerken
Balayage pour des réseaux locaux sans fil

(43) Date of publication of application: 27.09.2006
(73) Proprietor: Research In Motion Limited, Waterloo, Ontario N2L 3W8 (CA)
(72) Inventor: Abdel-Kader, Sherif, Waterloo, Ontario N2K 4H7 (CA); Bajar, David, Kitchener, Ontarion N2N 3H4 (CA); Chen, Yongsheng, Kitchener, Ontario N2M 5G1 (CA)
(74) Representative: Rickard, David John

(56) References cited:
- EP-A- 1 398 912
- US-A1- 2003 158 922
- US-A1- 2004 137 905
- US-A1- 2005 037 754
- IEEE-SA STANDARDS BOARD: "ANSI/IEEE Std 802.11, 1999 Edition (R2003) Part 11: Wireless LAN Medium Access Control (MAC) and Physical Layer (PHY) Specifications" 12 June 2003 (2003-06-12), ANSI/IEEE STD 802.11, XX, XX, PAGE(S) 1,2,101-104,125 , XP002337533 * pages 101 - 102, section 10.3.2.1 * * pages 125 - 127, section 11.1.3 *

## Description

The invention generally relates to wireless local area networks (WLAN). In particular, embodiments of the invention relate to power saving for one or more client devices in a wireless network.

Some wireless networks are based on a cellular architecture where the system is subdivided into wireless network cells. One type of wireless network cell, known as a basic service set (BSS), contains client devices controlled by a wireless network access point (AP), and another type of wireless network cell, known as an independent basic service set (IBSS), contains client devices which are not controlled by an access point.

In a BSS, client devices may communicate with the access point over a common wireless communication channel using a time sharing scheme. In an IBSS, client devices may communicate directly with other client devices over a common wireless communication channel using a time sharing scheme. A service set identifier (SSID) is a label or name that distinguishes one wireless network from another. Client devices use the SSID to establish and maintain connectivity. Wireless access points of different BSSs may be connected via a distribution system (DS) that is usually a wired network. The entire interconnected WLAN network, including the different WLAN cells, their respective WLAN access points and the distribution system is known as an extended service set (ESS). A client device may be able to switch between BSS mode and IBSS mode.

A client device may, or may not, be battery-powered. For example, a client device, such as a wireless-enabled laptop, a wireless-enabled cellphone, a wireless-enabled personal digital assistant (PDA), and the like, may sometimes be battery-powered, and at other times may receive power from an external source, such as a power outlet. Other client devices, such as a desktop computer, may receive power from an external source, such as a power outlet, and may not have the option to be battery-powered.

[0004a] EP1398912 discloses that, in response to a search process performed by a mobile terminal, individual access points "APs" transmit AP data required for roaming directly to the mobile terminal. The mobile terminal performs a passive scanning search or an active scanning search for the peripheral APs at short time intervals, and obtains and stores the latest AP data in an AP data table. However, when the passive scanner fails to obtain the AP through passive scanning, the active scanner performs the active scanning. Consequently, the passive scanning process is completed before the decision to initiate active scanning is made.

[0004b] US2005/037754 discloses a mobile unit that may detect and connect to a wireless local area network, contemplating worldwide multi-band networks and multiple regulatory domains, with a shorter searching time. The search comprises alternating between passive scanning and active scanning. For each channel that is examined, passive scanning is performed first and if a condition is met, active scanning is launched after the passive scanning.

### GENERAL

It may be beneficial to enhance the battery lifetime of battery-powered client devices.

[0005a] In accordance with one aspect of the present invention, there is provided a method in a wireless device, the method comprising: initiating active scanning for a particular wireless network name during passive scanning for a wireless local area network that matches a profile stored in a wireless local area network controller so that said active scanning and said passive scanning are performed concurrently at some point in time, said profile comprising said particular wireless network name, wherein active scanning for said particular wireless network name comprises transmitting one or more probe requests.

[0005b] In accordance with another aspect of the present invention, there is provided a wireless device comprising: a memory arranged to store profiles of one or more wireless local area networks; a wireless local area network controller arranged to support passive scanning for wireless networks matching a profile and arranged to support active scanning for wireless networks having a wireless network name; and a processor, wherein said memory is arranged to store executable code means which, when executed by said processor, initiates active scanning by said controller for a particular wireless network name during passive scanning by said controller for a wireless network that matches a profile including said particular wireless network name_so that said active scanning and said passive scanning are performed concurrently at some point in time, wherein active scanning for said particular wireless network name comprises transmitting one or more probe requests.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is an illustration of an exemplary communications system, according to some embodiments of the invention;

Figure 2 is a block diagram of an exemplary client device, according to some embodiments of the invention; and

Figure 3 is a flowchart of an exemplary method to be performed by a client device, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### Description of Preferred Embodiments

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

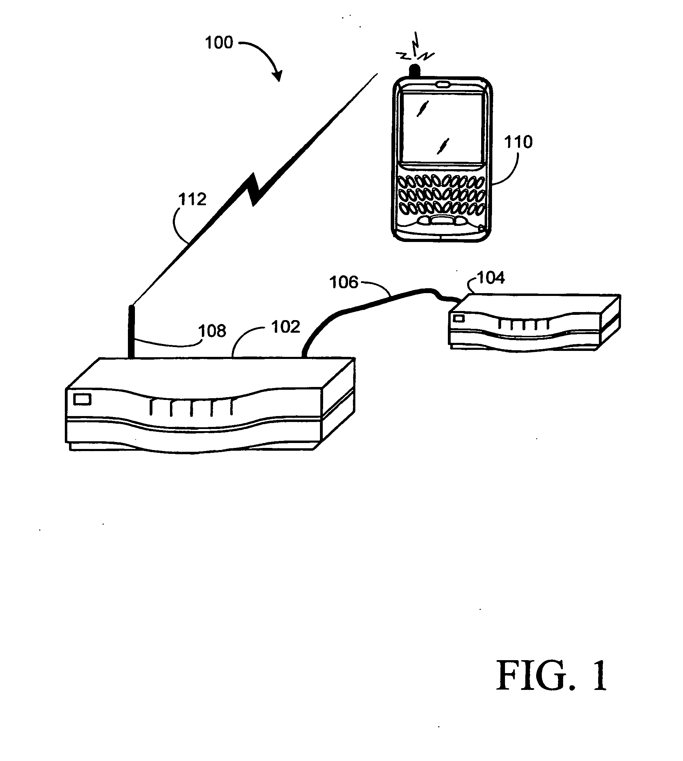

Figure 1 is an illustration of an exemplary communications system 100 according to embodiments of the invention. System 100 includes a wireless access point (AP) 102 and a network gateway 104 coupled to AP 102 via wired connections 106. Network gateway 104 and wired connections 106 may be part of a "distribution system" for AP 102. Non-limiting examples for network gateway 104 are cable modems, Asymmetric Digital Subscriber Line (ADSL) modems, Asynchronous Transfer Mode (ATM) network gateways, dial-up modems, satellite modems, Integrated Services Digital Network (ISDN) gateways, T-carrier 1 (T1) modems, and the like. It is obvious that any other configuration of a distribution system for AP 102 is possible.

AP 102 has at least one antenna 108 and is configurable to support at least one wireless network name, for example, at least one service set identifier (SSID). A non-exhaustive list of examples for antenna 108 includes a dipole antenna, a monopole antenna, a multilayer ceramic antenna, a planar inverted-F antenna, a loop antenna, a shot antenna, a dual antenna, an omnidirectional antenna and any other suitable antenna. AP 102 may include a router.

Exemplary communications system 100 includes a wireless client device 110. A non-exhaustive list of examples for client device 110 includes a wireless-enabled laptop, a wireless-enabled cellphone, a wireless-enabled personal digital assistant (PDA), a wireless-enabled video camera, a wireless-enabled gaming console, a wireless Internet-Protocol (IP) phone and any other suitable wireless client device. Client device 110 is able to execute a process to associate itself with AP 102 in a wireless network. For example, client device 110 may become associated with AP 102 over a wireless network 112.

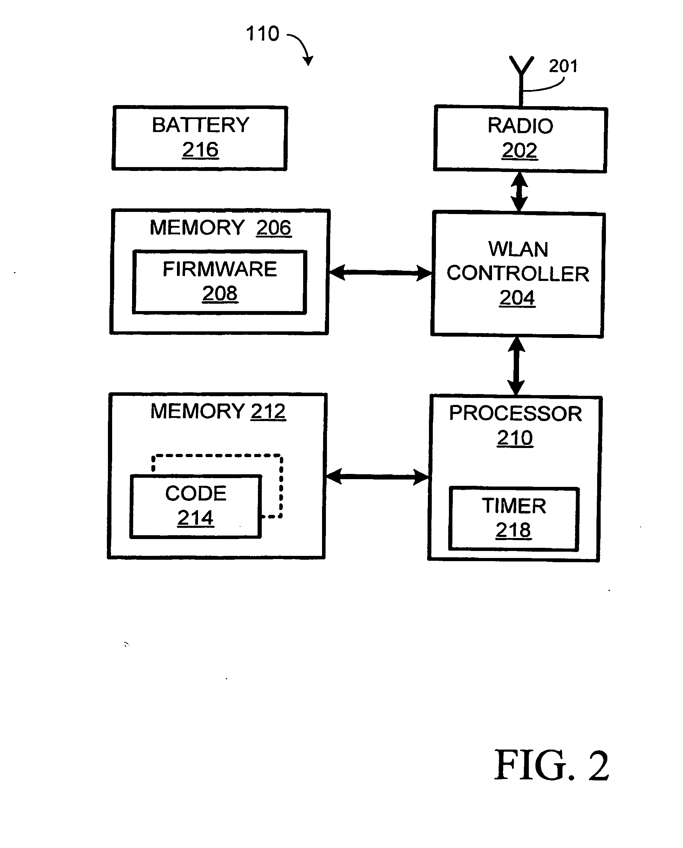

Figure 2 is a block diagram of an exemplary client device 110, according to some embodiments of the invention. Wireless client device 110 includes at least one antenna 201 coupled to a radio 202, which in turn is coupled to a WLAN controller 204. WLAN controller 204 may be coupled to a memory 206 storing firmware 208 to be executed by WLAN controller 204. Wireless client device 110 includes a processor 210 and a memory 212 coupled to processor 210. Memory 212 may store executable code 214 to be executed by processor 210.

Processor 210 may be coupled to WLAN controller 204 and may be able to control, at least in part, the operation of WLAN controller 204. Client device 110 includes a battery 216 to provide power to radio 202, WLAN controller 204, processor 210 and memories 206 and 212. Wireless client device 110 may include other components that, for clarity, are not shown.

A non-exhaustive list of examples for processor 210 includes a central processing unit (CPU), a digital signal processor (DSP), a reduced instruction set computer (RISC), a complex instruction set computer (CISC) and the like. Memories 206 and 212 may be fixed in or removable from client device 110. A non-exhaustive list of examples for memories 206 and 212 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antenna 201 includes a dipole antenna, a monopole antenna, a multilayer ceramic antenna, a planar inverted-F antenna, a loop antenna, a shot antenna, a dual antenna, an omnidirectional antenna and any other suitable antenna.

Radio 202, WLAN controller 204, processor 210 and memories 206 and 212 are functional blocks and may be implemented in any physical way in client device 110. For example, radio 202, WLAN controller 204, processor 210 and memories 206 and 212 may each be implemented in a separate integrated circuit, and optionally in additional discrete components. Alternatively, some of the functional blocks may be grouped in one integrated circuit. Furthermore, the functional blocks may be parts of application specific integrated circuits (ASIC), field programmable gate arrays (FPGA) or application specific standard products (ASSP).

In the example of FIG. 1, AP 102 and client device 110 are both "802.11-enabled", which means that wireless communications therebetween are in accordance with one or more of the following standards defined by the Institute of Electrical and Electronic Engineers (IEEE) for Wireless LAN MAC and Physical layer (PHY) specifications. However, it will be obvious to those of ordinary skill in the art how to modify the following for other existing WLAN standards or future related standards, including 802.1 1n.

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency Division Multiplexing |
| 802.11b | 1999 | 11 Mbps | 2.4 GHz | Complementary Code Keying |
| 802.11g | 2003 | 54 Mbps | 2.4 GHz | Orthogonal Frequency Division Multiplexing |

The 1999 edition of the 802.11 standard (as reaffirmed June 12, 2003) distinguishes between infrastructure WLANs (BSS) and ad-hoc WLANs (IBSS).

In order to join a BSS managed by AP 102, i.e. to become connected to AP 102 over wireless network 112, client device 110 has to initiate and perform a "connectivity sequence" with AP 102. In client device 110, WLAN controller 204 may perform the connectivity sequence, optionally jointly with processor 210. The connectivity sequence may include three consecutive processes - a "probing" process, an "authentication" process and an "association" process.

The probing process begins by having the client device transmit one or more "probe request" frames over one or more communication channels defined by the communication standard. Standard 802.11B, for example, defines 11 different communication channels. The probe request frame contains information about client device 110, such as which data rates are supported by client device 110 and to which SSID client device 110 requests to connect. Client device 110 may send probe requests blindly, without being aware whether an access point with the same SSID exists in its vicinity, and without knowing what data rate is acceptable for that access point. For that reason, client device 110 may send probe requests at the lowest data rate defined by the respective standard, e.g. 1 Mbps (Megabits per second).

If AP 102 receives a probe request frame on one of the communication channels, it may reply to the probe request frame by transmitting a "probe response" frame on that channel. A probe response frame includes information such as the SSID for which AP 102 is configured, a timestamp, data rates supported by AP 102, "beacon interval" information and physical layer information.

If client device 110 receives a probe response frame transmitted by AP 102, it may examine whether the SSID of AP 102 matches the SSID sent by client device 110 in the probe request, may examine other information included in the probe response frame and may examine the strength of the signal carrying the frame. Client device 110 may decide whether to continue the process for connecting with AP 102.

After completing the probing process, client device 110 may have to identify itself and to get permission to connect with AP 102. This process can have different forms, depending on a security mechanism deployed in the particular network. In one simple example for this process, client device 110 may send an "authentication request" frame to AP 102 and in response may receive an "authentication response" frame from AP 102. If the authentication response frame grants client device 110 permission to connect with AP 102, client device 110 may initiate the association process.

Client device 110 may initiate an association process by transmitting an "association" frame. In response, AP 102 may transmit an "association response" frame that indicates the success or failure of the association. If the association succeeded, the association response frame may include an association identification (AID) for client device 110.

The total time to complete a full connectivity sequence, from the first probe request to reception of the association response, may vary and may be as long as several seconds, for example, 3 seconds. The probing process itself may take, for example, 1 second. The timing in which the different response frames arrive at client device 110 during the connectivity sequence is unknown, and therefore, during the entire connectivity sequence, radio 202 may have to be able to receive signals and cannot be in a "sleep" state to conserve power.

It may be desired to decrease the amount of power consumed by client device 110 while performing a connectivity sequence in order to conserve the power stored in battery 216.

The 802.11 standard explains that access points transmit beacon frames at substantially regular time periods to announce the existence of and to synchronize wireless networks. The format of beacon frames and their contents is explained in detail in the 802.11 standard. The beacon interval is included in each beacon frame. The number of time units between target beacon transmission times is referred to as a "beacon interval".

Beacon frames may, or may not include the SSID of the wireless network they belong to. For example, beacon frames transmitted by AP 102 over wireless network 112 may contain the SSID associated with wireless network 112. In addition, each beacon frame also includes a timestamp which is the value of a clock internal to the access point at the actual transmission time of the beacon. A client device receiving the beacon frame will update its internal clock according to the timestamp in the received beacon frame. Moreover, beacon frames may include other information.

Client device 110 may look for a wireless network, for example, wireless network 112, using techniques known as "active scanning" and "passive scanning". In preparation, processor 210 may program a profile of the wireless network that is sought, including the network's SSID, to WLAN controller 204. Upon being operatively coupled to radio 202, WLAN controller 204 may automatically initiate passive scanning for the sought network. In passive scanning, WLAN controller 204 listens for beacon frames, one communication channel at a time. If a beacon frame including the SSID of the sought wireless network is received, WLAN controller 204 may initiate an authentication process and, if the authentication process is successful, may initiate an association process with the access point that sent the beacon frame. If a beacon frame not including any SSID is received, WLAN controller 204 may initiate a connectivity sequence by sending a probe request on the communication channel of the received beacon frame. If the profile in the probe response matches the profile stored in WLAN controller 204, WLAN controller 204 may initiate an authentication process and, if the authentication process is successful, may initiate an association process with the access point that sent the probe response. If the profile in the probe response matches the SSID of the profile stored in WLAN controller 204, but does not match other characteristics of that profile, or if the profile in the probe response does not match the SSID of the profile stored in WLAN controller 204, then WLAN controller 204 may proceed to passively scan on the next communication channel. Client device 110 may wait a predefined period of time, for example, 3 seconds, for WLAN controller 204 to report having successfully associated with the sought wireless network. If no such report is received during this predefined period of time (timed using a timer 218 in processor 210), client device 110 may take additional action, such as, for example, programming into WLAN controller 204 the profile of an additional wireless network to search for, or putting radio 202 into a sleep state.

If client device 110 were to use only passive scanning when looking for a wireless network and the sought network was unavailable, then client device 110 would be required to wait the full predefined period of time before taking additional action.

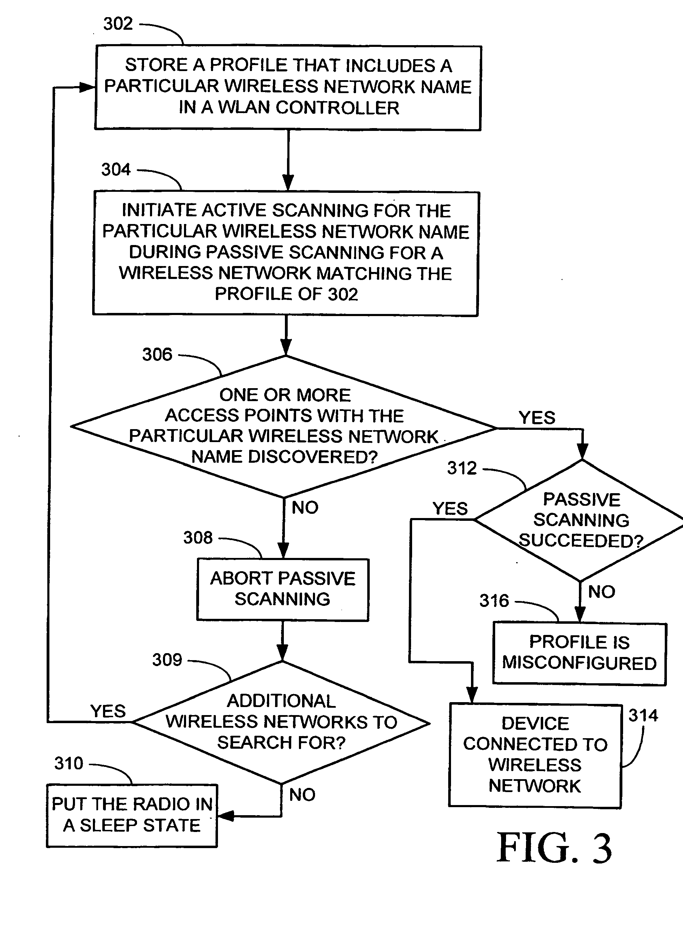

Figure 3 is a flowchart of an exemplary method to be implemented by client device 110, according to some embodiments of the invention. Executable code 214, when executed by processor 110, may cause client device 110 to implement the method of Figure 3.

At 302, client device 110 may store a profile that includes a particular wireless network name in WLAN controller 204.

At 304, client device 110 may initiate active scanning for the particular wireless network name during passive scanning for a wireless network that matches the profile stored in WLAN controller 204 at 302. Active scanning for the particular wireless network name may include transmitting one or more probe requests, each of the probe requests transmitted on a different communication channel.

In active scanning, WLAN controller 204 does not wait for the receipt of a beacon frame in order to transmit the probe request. Moreover, WLAN controller 204 reports back to processor 210 as soon as WLAN controller 204 has succeeded in discovering an access point with the particular wireless network name in the probe requests of the active scanning. Similarly, WLAN controller 204 reports back to processor 210 as soon as WLAN controller 204 has failed to discover any access points with the particular wireless network name in the probe requests of the active scanning. Consequently, if no access point with the particular wireless network name has been discovered due to the active scanning, client device 110 will be notified of such sooner than if it had relied only on passive scanning.

If processor 210 receives a response that indicates a failure to discover any access points with the particular wireless network name (checked at 306), processor 210 may abort the passive scanning at 308.

Memory 212 may store profiles of more than one wireless network to be sought. For example, a user of client device 110 may store in memory 212 profiles of the wireless networks at the user's home, the user's workplace and other wireless networks that the user may wish to connect to.

If there are no additional wireless networks to be sought (checked at 309), then client device 110 may put radio 202 into a sleep state at 310. After sleeping for some time, client device 110 may put radio 202 into an active state and resume the method of Figure 3. The sleeping duration may be increased with each unsuccessful attempt to find the wireless network, until it reaches an upper limit.

If there are additional wireless networks to be sought (checked at 309), then client device may resume the method at 302 to store a different profile with a different wireless network name in WLAN controller 204. This may cause WLAN controller 204 to perform passive scanning for wireless networks that match the different profile.

If, however, processor 210 receives a response that indicates discovery of one or more access points with the particular wireless network name (checked at 306), then the passive scanning, if successful (checked at 312), ought to result in association of client device 110 and the wireless network at 314. If passive scanning is not successful (checked at 312) despite the discovery of one or more access points with the particular wireless network name via active scanning, this is an indication that the profile stored in WLAN controller 204 at 302 is misconfigured (316).

In the event of a misconfigured profile, client device 110 may post an error to the user indicating an invalid configuration in the profile, and/or may automatically omit that profile from further scans until the user has edited the parameters of the profile (perhaps changing the authentication setting or the encryption setting).

While certain features of the invention have been illustrated and described herein, many modifications, substitutions, changes, and equivalents will now occur to those of ordinary skill in the art within the scope of the appended claims.

## Claims

1. A method in a wireless device (110), the method comprising:
initiating active scanning (304) for a particular wireless network name during passive scanning for a wireless local area network (112) that matches a profile stored in a wireless local area network controller (204) so that said active scanning and said passive scanning are performed concurrently at some point in time, said profile comprising said particular wireless network name,
wherein active scanning for said particular wireless network name comprises transmitting one or more probe requests.

2. The method of claim 1, further comprising:
aborting said passive scanning (308) upon receipt of a response from said active scanning that indicates a failure to discover any access points with said particular wireless network name.

3. The method of claim 2, further comprising:
storing a different profile with a different wireless network name in said wireless local area network controller (204); and
during passive scanning for a wireless local area network matching said different profile, initiating active scanning for said different wireless network name (309) so that said active scanning for said different wireless network name and said passive scanning for said wireless local area network matching said different profile are performed concurrently at another point in time.

4. The method of claim 2, further comprising:
putting a radio (202) of said device (110) into a sleep state (310).

5. The method of claim 1, further comprising:
following receipt of a response from said active scanning that indicates discovery of one or more access points (102) with said particular wireless network name, identifying that said profile is misconfigured (316) if said passive scanning fails to result in an association.

6. A wireless device (110) comprising:
a memory (212) arranged to store profiles of one or more wireless local area networks (112);
a wireless local area network controller (204) arranged to support passive scanning for wireless networks matching a profile and arranged to support active scanning for wireless networks having a wireless network name; and
a processor (210),
wherein said memory (212) is arranged to store executable code means (214) which, when executed by said processor (210), initiates active scanning by said controller (204) for a particular wireless network name during passive scanning by said controller (204) for a wireless network that matches a profile including said particular wireless network name so that said active scanning and said passive scanning are performed concurrently at some point in time,
wherein active scanning for said particular wireless network name comprises transmitting one or more probe requests.

7. The wireless device (110) of claim 6, wherein said code means (214), when executed by said processor (210), causes said controller (204) to abort said passive scanning upon receipt of a response from said active scanning that indicates a failure to discover any access points (102) with said particular wireless network name.

8. The wireless device (110) of claim 7, wherein said code means (214), when executed by said processor (210), stores a different profile with a different wireless network name in said wireless local area network controller (204) 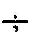 and initiates active scanning for said different wireless network name during passive scanning for a wireless local area network matching said different profile so that said active scanning for said different wireless network name and said passive scanning for said wireless local area network matching said different profile are performed concurrently at another point in time.

9. A machine readable medium comprising program code means (214) executable by a processor (210) of the device (110) of any one of claims 6 to 8 for implementing the method of any one of claims 1 to 5.

10. A communications system (100) comprising at least one wireless device (110) according to any one of claims 6 to 8.

## Patentansprüche

1. Ein Verfahren in einem Drahtlosgerät (110), wobei das Verfahren Folgendes umfasst:
das Initiieren des aktiven Abtastens (304) nach einem bestimmten Drahtlosnetzwerknamen während des passiven Abtastens nach einem WLAN (Wireless Local Area Network) (112), das mit einem Profil übereinstimmt, welches in einem WLAN-Controller (204) gespeichert ist und das den bestimmten Drahtlosnetzwerknamen einschließt, so dass das aktive Abtasten und das passive Abtasten zu einem bestimmten Zeitpunkt gleichzeitig durchgeführt werden,
wobei das aktive Abtasten nach dem bestimmten Drahtlosnetzwerknamen das Übertragen von einer oder mehreren Anforderungsabfragen (Probe Requests) umfasst.

2. Das Verfahren gemäß Anspruch 1, des Weiteren umfassend:
das Abbrechen des passiven Abtastens (308) beim Empfangen einer Antwort von dem aktiven Abtasten, die ein Fehlschlagen des Entdeckens von irgendwelchen Access Points mit dem bestimmten Drahtlosnetzwerknamen anzeigt.

3. Das Verfahren gemäß Anspruch 2, des Weiteren umfassend:
das Speichern eines unterschiedlichen Profils mit einem unterschiedlichen Drahtlosnetzwerknamen in dem WLAN-Controller (Wireless Local Area Network) (204); und
während des passiven Abtastens nach einem WLAN, das mit dem unterschiedlichen Profil übereinstimmt, das Initiieren des aktiven Abtastens nach dem unterschiedlichen Drahtlosnetzwerknamen (309), so dass das aktive Abtasten nach dem unterschiedlichen Drahtlosnetzwerknamen und das passive Abtasten nach dem WLAN, das mit dem unterschiedlichen Profil übereinstimmt, zu einem anderen Zeitpunkt gleichzeitig durchgeführt werden.

4. Das Verfahren gemäß Anspruch 2, des Weiteren umfassend:
das Versetzen einer Funkeinrichtung (202) des Geräts (110) in einen Schlafzustand (310).

5. Das Verfahren gemäß Anspruch 1, des Weiteren umfassend:
im Anschluss an das Empfangen einer Antwort von dem aktiven Abtasten, die das Entdecken von einem oder mehreren Access Points (102) mit dem bestimmten Drahtlosnetzwerknamen anzeigt, das Identifizieren, dass das Profil fehlkonfiguriert ist (316), wenn das passive Abtasten nicht zu einer Assoziation führt.

6. Ein Drahtlosgerät (110), umfassend:
einen Speicher (212), der zum Speichern von Profilen von einem oder mehreren WLANs (Wireless Local Area Network) (112) eingerichtet ist;
einen WLAN-Controller (204), der zur Unterstützung des passiven Abtastens nach Drahtlosnetzwerken eingerichtet ist, die mit einem Profil übereinstimmen, und der zur Unterstützung des aktiven Abtastens nach Drahtlosnetzwerken mit einem Drahtlosnetzwerknamen eingerichtet ist; und
einen Prozessor (210),
wobei der Speicher (212) so eingerichtet ist, dass er ausführbare Codemittel (214) speichert, die bei Ausführung durch den Prozessor (210) das aktive Abtasten durch den Controller (204) nach einem bestimmten Drahtlosnetzwerknamen während des passiven Abtastens durch den Controller (204) nach einem Drahtlosnetz initiiert, das mit einem Profil übereinstimmt, welches den bestimmten Drahtlosnetznamen einschließt, so dass das aktive Abtasten und das passive Abtasten zu einem bestimmten Zeitpunkt gleichzeitig durchgeführt werden,
wobei das aktive Abtasten nach dem bestimmten Drahtlosnetzwerknamen das Übertragen von einer oder mehreren Anforderungsabfragen (Probe Requests) umfasst.

7. Das Drahtlosgerät (110) gemäß Anspruch 6, wobei die Codemittel (214) bei Ausführung durch den Prozessor (210) den Controller (204) dazu bringen, das passive Abtasten abzubrechen, wenn eine Antwort von dem aktiven Abtasten empfangen wird, die ein Fehlschlagen des Entdeckens von irgendwelchen Access Points (102) mit dem bestimmten Drahtlosnetzwerknamen anzeigt.

8. Das Drahtlosgerät (110) gemäß Anspruch 7, wobei die Codemittel (214) bei Ausführung durch den Prozessor (210) bewirken, dass ein unterschiedliches Profil mit einem unterschiedlichen Drahtlosnetzwerknamen in dem WLAN-Controller (Wireless Local Area Network) (204) gespeichert wird und dass während des passiven Abtastens nach einem WLAN, das mit dem unterschiedlichen Profil übereinstimmt, das aktive Abtasten nach dem unterschiedlichen Drahtlosnetzwerknamen initiiert wird, so dass das aktive Abtasten nach dem unterschiedlichen Drahtlosnetzwerknamen und das passive Abtasten nach dem WLAN, das mit dem unterschiedlichen Profil übereinstimmt, zu einem anderen Zeitpunkt gleichzeitig durchgeführt werden.

9. Ein maschinenlesbares Medium, das Programmcodemittel (214) umfasst, die durch einen Prozessor (210) des Geräts (110) gemäß jedem der Ansprüche 6 bis 8 ausgeführt werden können, um das Verfahren gemäß jedem der Ansprüche 1 bis 5 zu implementieren.

10. Ein Kommunikationssystem (100), umfassend mindestens ein Drahtlosgerät (110) gemäß jedem der Ansprüche 6 bis 8.

## Revendications

1. Procédé qui, dans un dispositif sans fil (110), comprend les étapes consistant à :
lancer un balayage actif (304) pour chercher un nom de réseau sans fil particulier pendant un balayage passif pour chercher un réseau local sans fil (112) qui correspond à un profil stocké dans un contrôleur de réseau local sans fil (204) de façon que ledit balayage actif et ledit balayage passif soient effectués simultanément à un moment donné, ledit profil comprenant ledit nom de réseau sans fil particulier,
le balayage actif pour chercher ledit nom de réseau sans fil particulier comprenant la transmission d'une ou plusieurs demande(s) de détection *(Probe Request).*

2. Procédé de la revendication 1 comprenant également les étapes consistant à :
abandonner ledit balayage passif (308) dès réception d'une réponse dudit balayage actif indiquant qu'il n'a pas été possible de découvrir un point d'accès portant le nom de réseau sans fil particulier.

3. Procédé de la revendication 2 comprenant également les étapes consistant à:
stocker un profil différent avec un nom de réseau sans fil différent dans ledit contrôleur de réseau local sans fil (204) ; et
pendant le balayage passif pour chercher un réseau local sans fil correspondant audit profil différent, lancer le balayage actif pour chercher ledit nom de réseau sans fil différent (309) pour que ledit balayage actif pour chercher ledit nom de réseau sans fil différent et ledit balayage passif pour chercher ledit réseau local sans fil correspondant audit profil différent soient effectués simultanément à un autre moment.

4. Procédé de la revendication 2 comprenant également les étapes consistant à :
mettre une radio (202) dudit dispositif (110) en état de veille (310).

5. Procédé de la revendication 1 comprenant également les étapes consistant à :
suite à la réception d'une réponse dudit balayage actif indiquant la découverte d'un ou plusieurs point(s) d'accès (102) avec ledit nom de réseau sans fil particulier, identifier que ledit profil est mal configuré (316) si ledit balayage passif ne parvient pas à entraîner une association.

6. Dispositif sans fil (110) comprenant :
une mémoire (212) agencée pour stocker des profils d'un ou plusieurs réseau(x) local/locaux sans fil (112) ;
un contrôleur de réseau local sans fil (204) agencé pour prendre en charge le balayage passif pour chercher des réseaux sans fil correspondant à un profil et agencé pour prendre en charge le balayage actif pour chercher des réseaux sans fil ayant un nom de réseau sans fil ; et
un processeur (210),
dans lequel ladite mémoire (212) est agencée pour stocker un moyen logiciel exécutable (214) qui, lorsqu'il est exécuté par ledit processeur (210), lance le balayage actif par ledit contrôleur (204) pour chercher un nom de réseau sans fil particulier pendant le balayage passif par ledit contrôleur (204) pour chercher un réseau sans fil qui correspond à un profil incluant ledit nom de réseau sans fil particulier pour que ledit balayage actif et ledit balayage passif soient effectués simultanément à un moment donné,
le balayage actif pour chercher ledit nom de réseau sans fil particulier comprenant la transmission d'une ou plusieurs demande(s) de détection *(Probe Request).*

7. Dispositif sans fil (110) de la revendication 6, dans lequel ledit moyen logiciel (214), lorsqu'il est exécuté par ledit processeur (210), fait que ledit contrôleur (204) abandonne ledit balayage passif dès réception d'une réponse dudit balayage actif indiquant qu'il n'a pas été possible de découvrir un point d'accès (102) portant ledit nom de réseau sans fil particulier.

8. Dispositif sans fil (110) de la revendication 7, dans lequel ledit moyen logiciel (214), lorsqu'il est exécuté par ledit processeur (210), stocke un profil différent avec un nom de réseau sans fil différent dans ledit contrôleur de réseau local sans fil (204), et lance un balayage actif pour chercher ledit nom de réseau sans fil différent pendant le balayage passif pour chercher un réseau local sans fil correspondant audit profil différent pour que ledit balayage actif pour chercher ledit nom de réseau sans fil différent et ledit balayage passif pour chercher ledit réseau local sans fil correspondant audit profil différent soient effectués simultanément à un autre moment.

9. Support lisible par machine contenant le moyen logiciel (214) exécutable sur un processeur (210) du dispositif (110) de l'une quelconque des revendications 6 à 8 servant à implémenter le procédé de l'une quelconque des revendications 1 à 5.

10. Système de communication (100) comportant au moins un dispositif sans fil (110) conformément à l'une quelconque des revendications 6 à 8.
